# EUROPÄISCHE PATENTANMELDUNG

(11) **EP 4 300 356 A1**
(43) Veröffentlichungstag der Anmeldung: **03.01.2024**
(21) Anmeldenummer: 22182184.6
(22) Anmeldetag: 30.06.2022
(51) Int. Cl.: G06N 3/00, G06N 3/04, G06N 3/08, G05B 13/02

(54) **MASCHINENSTEUERUNG UND VERFAHREN ZUM KONFIGURIEREN DER MASCHINENSTEUERUNG**

(71) Anmelder: Siemens Aktiengesellschaft, 80333 München (DE)
(72) Erfinder: Hein, Daniel, 81549 München (DE); Udluft, Steffen, 82223 Eichenau (DE)
(74) Vertreter: Siemens Patent Attorneys

(57) **Zusammenfassung**

Zum Konfigurieren einer Maschinensteuerung (CTL) wird eine Vielzahl von Trainingsdatensätzen eingelesen, die jeweils einen kontinuierlichen, einen Betriebszustand einer Maschine quantifizierenden Zustandsvektor (SV) umfassen. Weiterhin wird ein Steuermodul (CM) bereitgestellt, das anhand eines Zustandsvektors (SV) ein Steuersignal (CS) zum Steuern der Maschine (M) ausgibt. Die kontinuierlichen Zustandsvektoren (SV) werden in ein lernbasiertes Quantisierungsmodul (QM) eingespeist, das die kontinuierlichen Zustandsvektoren (SV) auf einen Satz von diskreten Zustandsvektoren (DSV) abbildet und damit diskretisiert. Die diskretisierten Zustandsvektoren (DSV) werden in das Steuermodul (CM) eingespeist, das daraus Steuersignale (CS) ableitet. Weiterhin wird eine Performanz für ein Steuern der Maschine (M) durch die abgeleiteten Steuersignale (CS) ermittelt. Erfindungsgemäß wird das Quantisierungsmodul (QM) darauf trainiert, die ermittelte Performanz zu optimieren. Schließlich wird die Maschinensteuerung (CTL) anhand des Steuermoduls (CM) und des diesem vorgeschalteten trainierten Quantisierungsmoduls (QM) zum Steuern der Maschine (M) eingerichtet.

## Beschreibung

Bei der Steuerung komplexer Maschinen, wie z.B. Robotern, Motoren, Fertigungsanlagen, Werkzeugmaschinen, Fräsmaschinen, Gasturbinen, Windturbinen, Dampfturbinen, Kühlanlagen, Heizungsanlagen oder Verbrennungskraftmaschinen werden zunehmend Verfahren des maschinellen Lernens eingesetzt. Mittels derartiger Lernverfahren kann eine Maschinensteuerung anhand von Trainingsdaten darauf trainiert werden, ausgehend von aktuellen Betriebssignalen einer Maschine, diejenigen Steuersignale zum Steuern der Maschine zu ermitteln, die spezifisch ein gewünschtes oder optimiertes Verhalten der Maschine bewirken und damit deren Performanz optimieren.

Zum Trainieren einer solchen lernbasierten Maschinensteuerung steht eine Vielzahl bekannter Trainingsverfahren, wie z.B. Verfahren des bestärkenden Lernens zur Verfügung. Ein bestärkendes Lernen wird häufig auch als Reinforcement-Learning bezeichnet.

In vielen Fällen geraten jedoch zu steuernde Maschinen in kritische oder instabile Zustände, in denen bereits kleine Zustandsänderungen große Auswirkungen auf ein zukünftiges Verhalten der Maschine haben. Beispielsweise wenn bei einer Trajektorie einer Roboterhand Bruchteile von Millimetern darüber entscheiden können, ob die Roboterhand mit einem Hindernis kollidiert oder nicht, wenn ein aerodynamischer Parameter nahe eines Strömungsabrisses variiert wird, oder wenn eine Temperatur in der Nähe eines Phasenübergangs ist. Derartige Instabilitäten können eine Anwendung oder ein Training der Maschinensteuerung zum Teil erheblich beeinträchtigen und auch zu Divergenzen im Trainingsprozess führen.

Es ist Aufgabe der vorliegenden Erfindung, eine Maschinensteuerung sowie ein Verfahren zum Konfigurieren der Maschinensteuerung anzugeben, die eine Verringerung von Instabilitäten bei der Steuerung einer Maschine und/oder ein effizienteres Training der Maschinensteuerung erlauben.

Gelöst wird diese Aufgabe durch ein Verfahren mit den Merkmalen des Patentanspruchs 1, durch eine Maschinensteuerung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Konfigurieren einer Maschinensteuerung wird eine Vielzahl von Trainingsdatensätzen eingelesen, die jeweils einen kontinuierlichen, einen Betriebszustand einer Maschine quantifizierenden Zustandsvektor umfassen. Die kontinuierlichen Zustandsvektoren können hierbei ein- oder mehrdimensional sein. Entsprechend kann ein jeweiliger kontinuierlicher Zustandsvektor durch eine oder mehrere numerische Gleitkommazahlen dargestellt werden. Weiterhin wird ein Steuermodul bereitgestellt, das anhand eines Zustandsvektors ein Steuersignal zum Steuern der Maschine ausgibt. Die kontinuierlichen Zustandsvektoren werden in ein lernbasiertes Quantisierungsmodul eingespeist, das die kontinuierlichen Zustandsvektoren auf einen Satz von diskreten Zustandsvektoren abbildet und damit diskretisiert. Die diskretisierten Zustandsvektoren werden in das Steuermodul eingespeist, das daraus Steuersignale ableitet. Weiterhin wird eine Performanz für ein Steuern der Maschine durch die abgeleiteten Steuersignale ermittelt. Erfindungsgemäß wird das Quantisierungsmodul darauf trainiert, die ermittelte Performanz zu optimieren. Schließlich wird die Maschinensteuerung anhand des Steuermoduls und des diesem vorgeschalteten trainierten Quantisierungsmoduls zum Steuern der Maschine eingerichtet.

Zum Ausführen des erfindungsgemäßen Verfahrens sind eine Maschinensteuerung, ein Computerprogrammprodukt sowie ein vorzugsweise nichtflüchtiges computerlesbares Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Die Erfindung basiert zumindest teilweise auf der Einsicht, dass viele Trainingsverfahren in diskreten oder diskretisierten Zustandsräumen zum Teil erheblich stabiler ablaufen und/oder bessere Konvergenzeigenschaften aufweisen als in kontinuierlichen Zustandsräumen. Darüber hinaus arbeiten viele Steuermodule in diskreten oder diskretisierten Zustandsräumen effizienter oder sind einfacher implementierbar als in kontinuierlichen Zustandsräumen.

Die Erfindung erlaubt es, einen kontinuierlichen Zustandsraum derart zu diskretisieren, dass dadurch die Performanz der Steuerung optimiert wird. Für die Optimierung der Diskretisierungsprozesses wird also eine Zielgröße verwendet, die in der Regel auch zur Optimierung des Steuerungsprozesses herangezogen wird. Im Unterschied dazu sind herkömmliche Diskretisierungsroutinen häufig darauf ausgerichtet, einen geometrischen Diskretisierungsfehler zu optimieren. In kritischen Bereichen des Zustandsraums kann jedoch eine rein geometrisch motivierte Zusammenfassung von kontinuierlichen Zuständen zu einem diskreten Zustand zu einem instabilen und insbesondere unperformanten Steuerverhalten führen. Durch eine performanzgetriebene Optimierung der Zustandsraum-Diskretisierung können derartige Instabilitäten dagegen in vielen Fällen vermieden oder zumindest verringert werden.

Vorteilhafte Ausführungsformen und Weiterbildungen der Erfindung sind in den abhängigen Ansprüchen angegeben.

Nach einer vorteilhaften Ausführungsform der Erfindung kann die Maschine, eine dazu ähnliche Maschine und/oder eine Simulation der Maschine durch die abgeleiteten Steuersignale gesteuert und ein resultierendes Verhalten erfasst werden. Die Performanz kann dann anhand des erfassten Verhaltens ermittelt werden. So kann z.B. eine Leistung, ein Wirkungsgrad oder ein Ertrag der Maschine gemessen und als Performanz bewertet werden.

Gemäß einer weiteren vorteilhaften Ausführungsform der Erfindung kann ein aus Anwendung eines vom Steuermodul abgeleiteten Steuersignals resultierender Folge-Betriebszustand der Maschine durch einen kontinuierlichen Folgezustandsvektor quantifiziert werden. Der kontinuierliche Folgezustandsvektor kann durch das Quantisierungsmodul auf einen diskreten Folgezustandsvektor aus dem Satz der diskreten Zustandsvektoren abgebildet werden. Aus dem diskreten Folgezustandsvektor kann das Steuermodul dann ein Folgesteuersignal ableiten. Schließlich kann bei der Ermittlung der Performanz ein Steuern der Maschine durch das abgeleitete Folgesteuersignal berücksichtigt werden. Der resultierende Folge-Betriebszustand kann hierbei an der Maschine oder an einer dazu ähnlichen Maschine gemessen oder anhand einer Simulation oder eines datengetriebenen Modells der Maschine ermittelt werden. Durch die Quantisierung der Zustände und Folgezustände kann die Steuerung der Maschine und insbesondere eine performanzgetriebene Optimierung der Steuerung auf einen diskreten Markow-Prozess zwischen verhältnismäßig wenigen diskreten Zuständen abgebildet werden. Auf diese Weise kann in vielen Fällen eine Stabilität der Steuerung erhöht, eine Implementierung von Steuermodulen vereinfacht und/oder ein Training von Steuermodulen verbessert werden.

Insbesondere kann zur Ermittlung von Folgezuständen ein Maschinenlernmodul vorgesehen sein, das darauf trainiert ist oder darauf trainiert wird, anhand eines Zustandsvektors und eines Steuersignals einen resultierenden Folge-Betriebszustand der Maschine zu prädizieren. Der resultierende Folge-Betriebszustand kann dann - wie oben schon erwähnt - auf einen diskreten Folgezustandsvektor abgebildet werden, aus dem das Steuermodul ein Folgesteuersignal ableitet. Das Folgesteuersignal kann wiederum in das Maschinenlernmodul eingespeist werden, um einen weiteren Folge-Betriebszustand zu prädizieren. Auf diese Weise können ein Betriebszustand und ein Steuersignal schrittweise in die Zukunft extrapoliert bzw. vorhergesagt werden, so dass eine mehrere Zeitschritte umfassende Steuertrajektorie ermittelt werden kann. Eine solche Extrapolation wird häufig auch als Roll-Out oder virtueller Roll-Out bezeichnet. Für die Steuertrajektorie kann dann eine über mehrere Zeitschritte kumulierte Performanz berechnet und vorzugsweise dem Steuersignal am Anfang der Trajektorie zugeordnet werden. Auf diese Weise kann ein Steuersignal auch hinsichtlich längerfristiger Performanzziele optimiert werden. Eine solche kumulierte Performanz wird im Zusammenhang des bestärkenden Lernens häufig auch als "Return" bezeichnet. Zur Berechnung des Returns können die für zukünftige Zeitschritte ermittelten Performanzwerte diskontiert, d.h. mit für jeden Zeitschritt kleiner werdenden Gewichten versehen werden.

Gemäß einer besonders vorteilhaften Ausführungsform der Erfindung das Steuermodul lernbasiert sein und anhand der diskretisierten Zustandsvektoren darauf trainiert werden, die ermittelte Performanz zu optimieren. Insofern viele Lernverfahren auf diskreten Zustandsmengen beweisbar gegen ein optimiertes, hier performanzoptimiertes Steuerverhalten konvergieren, ist zu erwarten, dass das Steuermodul anhand der diskretisierten Zustandsvektoren in vielen Fällen effizienter trainiert werden kann als anhand von kontinuierlichen Zustandsvektoren.

Insbesondere kann das Steuermodul mittels eines Verfahrens der dynamischen Programmierung und/oder mittels eines Verfahrens des bestärkenden Lernens, vorzugsweise des diskreten bestärkenden Lernens trainiert werden.

Vorteilhafterweise können das Steuermodul und das Quantisierungsmodul aufeinander bezogen trainiert werden. Insbesondere kann für eine jeweilige Parametrisierung des Quantisierungsmoduls jeweils ein performanzoptimierendes Training des Steuermoduls durchgeführt werden, um ein performanzoptimiertes Steuermodul für diese Parametrisierung zu ermitteln. Eine durch das performanzoptimierte Steuermodul erreichbare Performanz der Maschine kann dann der betreffenden Parametrisierung des Quantisierungsmoduls zugeordnet werden. Entsprechend können im Rahmen des Trainings des Quantisierungsmoduls Parametrisierungen gesucht werden, denen eine hohe oder die höchste Performanz zugeordnet ist.

Gemäß einer weiteren vorteilhaften Ausführungsform der Erfindung kann das Quantisierungsmodul ein neuronales Netz umfassen. Die diskretisierten Zustandsvektoren können dann durch diskrete Ausgabesignale einer vorgegebenen Anzahl von Neuronen einer Ausgabeschicht des neuronalen Netzes dargestellt werden. So können in der Ausgabeschicht N diskrete Ausgabeneuronen vorgesehen sein, die jeweils infolge ihrer Aktivierung 0 oder 1 ausgeben. Auf diese Weise können 2^{N} diskrete Zustände bzw. Zustandsvektoren dargestellt oder unterschieden werden.

Weiterhin kann der Satz der diskreten Zustandsvektoren, eine Anzahl der diskreten Zustandsvektoren und/oder ein Mindestabstand der diskreten Zustandsvektoren vorgegeben sein. Der Mindestabstand kann hierbei z.B. als euklidischer Abstand im Zustandsraum definiert werden. Auf diese Weise kann eine Feinheit der Quantisierung bedarfsgerecht vorgegeben werden.

Vorteilhafterweise kann zum Training des Quantisierungsmoduls ein populationsbasiertes Optimierungsverfahren, ein gradientenfreies Optimierungsverfahren, eine Partikelschwarmoptimierung und/oder ein genetisches Optimierungsverfahren verwendet werden. Für die vorstehenden Verfahren ist eine Vielzahl von effizienten numerischen Routinen verfügbar.

Weiterhin kann das Quantisierungsmodul und/oder das Steuermodul ein künstliches neuronales Netz, ein rekurrentes neuronales Netz, ein faltendes neuronales Netz, ein mehrlagiges Perzeptron, ein bayessches neuronales Netz, einen Autoencoder, einen variationalen Autoencoder, einen Gauß-Prozess, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfassen.

Darüber hinaus kann die Maschine ein Roboter, ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Verbrennungskraftmaschine, eine Kühlanlage oder eine Heizungsanlage sein.

Ein Ausführungsbeispiel der Erfindung wird nachfolgend anhand der Zeichnung näher erläutert. Dabei veranschaulichen jeweils in schematischer Darstellung:
- Figur 1: eine erfindungsgemäße Maschinensteuerung beim Steuern einer Maschine und
- Figur 2: ein Training einer erfindungsgemäßen Maschinensteuerung.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

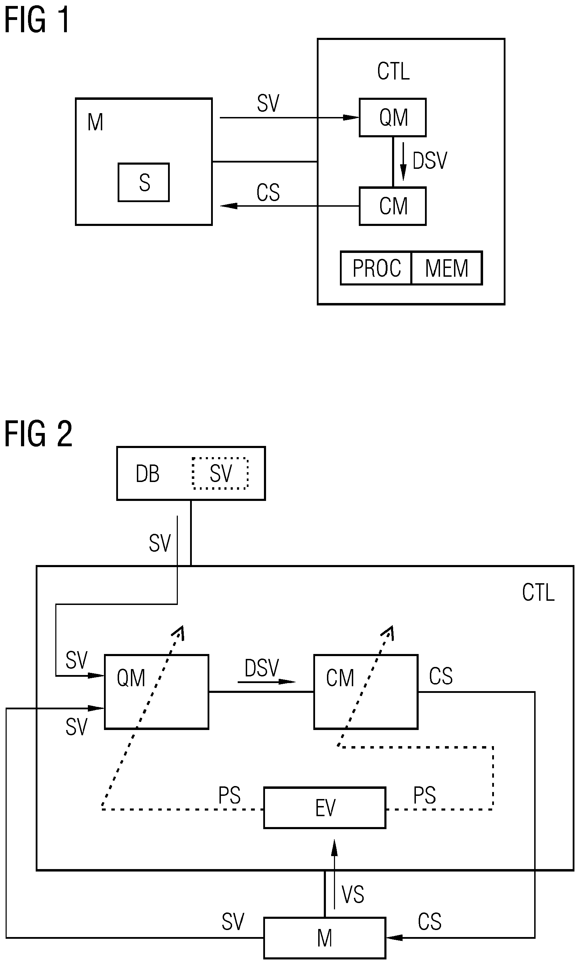

Figur 1 veranschaulicht beispielhaft eine erfindungsgemäße Maschinensteuerung CTL beim Steuern einer Maschine M, die im vorliegenden Ausführungsbeispiel als Roboter ausgestaltet ist. Alternativ oder zusätzlich kann die Maschine M auch ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Verbrennungskraftmaschine, eine Kühlanlage oder eine Heizungsanlage sein. Insbesondere kann auch eine Komponente oder ein Teilsystem einer Maschine oder einer Anlage als Maschine M aufgefasst werden.

Die Maschine M ist mit der Maschinensteuerung CTL gekoppelt, die als Teil der Maschine M oder ganz oder teilweise extern zur Maschine M implementiert sein kann. In den Figuren ist die Maschinensteuerung CTL aus Übersichtlichkeitsgründen extern zur Maschine M dargestellt. Die Maschinensteuerung CTL umfasst einen oder mehrere Prozessoren PROC zum Ausführen von Verfahrensschritten der Maschinensteuerung CTL sowie einen oder mehrere mit dem Prozessor PROC gekoppelte Speicher MEM zum Speichern der von der Maschinensteuerung CTL zu verarbeitenden Daten.

Die Maschine M verfügt über eine Sensorik S, die fortlaufend einen oder mehrere Zustandsgrößen oder andere Betriebsparameter der Maschine M misst und als Messwerte ausgibt. Die Betriebsparameter können insbesondere physikalische, regelungstechnische, chemische und/oder wirkungstechnische Zustandsgrößen, Umgebungsdaten oder andere im Betrieb der Maschine M anfallende oder den Betrieb beeinflussende Parameter umfassen. Die Zustandsgrößen können dabei eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder ihrer Komponenten betreffen. Bei einer Produktionsanlage können die Betriebsparameter auch eine Produktqualität oder eine andere Produkteigenschaft betreffen. Bei einer Gasturbine können die Zustandsgrößen eine Turbinenleistung, eine Rotationsgeschwindigkeit, Vibrationsfrequenzen, Vibrationsamplituden, Verbrennungsdynamiken, Verbrennungswechseldruckamplituden oder Stickoxidkonzentrationen betreffen.

Die Messwerte der Sensorik S sowie gegebenenfalls anderweitig erfasste Betriebsparameter der Maschine M werden fortlaufend in Form von ein oder mehrdimensionalen Zustandsvektoren SV von der Maschine M zur Maschinensteuerung CTL übermittelt.

Durch die Zustandsvektoren SV wird jeweils ein aktueller Betriebszustand der Maschine M quantifiziert. Dabei sei angenommen, dass ein jeweiliger Betriebszustand unter anderem durch ein oder mehrere kontinuierliche Zustandsgrößen der Maschine M quantifiziert wird. Die kontinuierlichen Zustandsgrößen können insbesondere kontinuierliche physikalische, regelungstechnische, chemische und/oder wirkungstechnische Zustandsgrößen sein. In den Zustandsvektoren SV können derartige kontinuierliche Zustandsgrößen insbesondere durch Gleitkommazahlen dargestellt werden. Ein Zustandsvektor SV, der kontinuierliche Zustandsgrößen umfasst, wird im Folgenden auch als kontinuierlicher Zustandsvektor bezeichnet.

Der Begriff "kontinuierlich" ist dem üblichen fachsprachlichen Gebrauch folgend, antagonistisch zum Begriff "diskret" zu verstehen. Während eine kontinuierliche Größe, wie zum Beispiel eine vorliegende Temperatur grundsätzlich beliebige Zwischenwerte annehmen kann, ist eine diskrete Größe, wie z.B. eine Schalterstellung auf verhältnismäßig wenige verschiedene Einzelwerte beschränkt. In der numerischen Praxis werden kontinuierliche Größen meist durch Gleitkommazahlen dargestellt, die in der Regel eine um mehrere oder viele Größenordnungen oder Zehnerpotenzen höhere Auflösung bieten als Darstellungen von diskreten Größen.

Weiterhin weist die Maschinensteuerung CTL ein lernbasiertes Quantisierungsmodul QM sowie ein diesem nachgeschaltetes Steuermodul CM auf.

Das Quantisierungsmodul QM dient dem Zweck, kontinuierliche Zustandsvektoren auf einen Satz von diskreten Zustandsvektoren abzubilden. Eine solche Abbildung wird fachsprachlich auch als Quantisierung bezeichnet.

Demgegenüber dient das Steuermodul CM dem Zweck, aus einem einen Betriebszustand der Maschine M spezifizierenden Zustandsvektor ein Steuersignal zum Steuern der Maschine M abzuleiten. Ein solches Steuermodul CM wird häufig auch als Policy oder Steuerungsagent bezeichnet.

Das Steuermodul CM wird mit durch das Quantisierungsmodul QM quantisierten Zustandsvektoren angesteuert. Somit kann für das Steuermodul CM vorteilhafterweise ein spezifisch für diskrete Zustandsräume ausgelegtes Steuermodul verwendet werden. Insbesondere kann die Steuerung auf einen diskreten Markow-Prozess zwischen verhältnismäßig wenigen diskreten Zuständen abgebildet werden. Derartige Steuermodule können in vielen Fällen einfacher implementiert werden und/oder sind stabiler betreibbar oder besser trainierbar als Steuermodule, die für kontinuierliche Zustandsräume ausgelegt sind.

Im vorliegenden Ausführungsbeispiel wird ein lernbasiertes Steuermodul CM verwendet, das durch ein Verfahren des diskreten bestärkenden Lernens und/oder durch ein Verfahren der dynamischen Programmierung trainiert oder trainierbar ist. Im vorliegenden Ausführungsbeispiel sind das Quantisierungsmodul QM und das Steuermodul CM jeweils als künstliches neuronales Netz implementiert.

Das Quantisierungsmodul QM sowie das Steuermodul CM werden vorab datengetrieben darauf trainiert, eine Performanz der Maschine M zu optimieren. Die Performanz kann hierbei z.B. eine Leistung, eine Präzision, eine Fehlerrate, einen Wirkungsgrad, eine Geschwindigkeit, eine Temperatur, einen Ressourcenverbrauch, einen Verschleiß, eine Stabilität, eine Ausbeute, einen Schadstoffausstoß, eine Produktqualität und/oder andere Zielparameter der Maschine M betreffen.

Durch das Training des Quantisierungsmoduls QM und des Steuermoduls CM wird die Maschinensteuerung CTL zum optimierten Steuern der Maschine M konfiguriert. Ein Ablauf dieses Trainings wird unten näher erläutert.

Zum optimierten Steuern der Maschine M werden die von der Maschine M zur Maschinensteuerung CTL übermittelten kontinuierlichen Zustandsvektoren SV in das trainierte Quantisierungsmodul QM eingespeist. Das trainierte Quantisierungsmodul QM bildet bestimmungsgemäß einen jeweiligen kontinuierlichen Zustandsvektor SV auf einen jeweiligen diskreten Zustandsvektor DSV aus dem Satz von diskreten Zustandsvektoren ab. Die resultierenden diskreten Zustandsvektoren DSV werden vom trainierten Quantisierungsmodul QM in das trainierte Steuermodul CM eingespeist, das daraus optimierte Steuersignale CS ableitet.

Die Steuersignale CS werden vom Steuermodul CM bzw. von der Maschinensteuerung CTL zur Maschine M übermittelt. Durch die übermittelten Steuersignale CS wird die Maschine M in optimierter Weise gesteuert, indem durch die Steuersignale CS induzierte Steueraktionen durch die Maschine M ausgeführt werden. Auf diese Weise kann z.B. ein Roboter durch entsprechende Steuersingale CS dazu veranlasst werden, eine optimierte Bewegungstrajektorie auszuführen. Analog dazu kann bei einer Gasturbine eine Gaszufuhr, eine Gasverteilung und/oder eine Luftzufuhr durch entsprechende Steuersignale CS eingestellt werden.

Figur 2 veranschaulicht ein Training einer erfindungsgemäßen Maschinensteuerung CTL. Durch das Training soll die Maschinensteuerung CTL zum optimierten Steuern der Maschine M konfiguriert werden.

Im vorliegenden Ausführungsbeispiel ist die Maschinensteuerung CTL an die Maschine M sowie an eine Datenbank DB gekoppelt. Die Maschinensteuerung CTL umfasst das zu trainierende Quantisierungsmodul QM sowie das zu trainierende, dem Quantisierungsmodul QM nachgeschaltete Steuermodul CM. Darüber hinaus verfügt die Maschinensteuerung über einen Performanzbewerter EV.

Zum Training der Maschinensteuerung CTL werden dieser eine Vielzahl von Trainingsdatensätzen zugeführt, die jeweils einen kontinuierlichen, einen Betriebszustand der Maschine M quantifizierenden Zustandsvektor SV umfassen. Wie oben schon erwähnt, können die kontinuierlichen Zustandsvektoren SV einoder mehrdimensional sein und entsprechend eine oder mehrere Gleitkommazahlen umfassen, die jeweils eine kontinuierliche Zustandsgröße der Maschine M quantifizieren.

Die zum Training verwendeten kontinuierlichen Zustandsvektoren SV werden vorzugsweise der Datenbank DB entnommen, in der eine große Menge von Trainingsdaten gespeichert sind. Derartige Trainingsdaten werden häufig auch als Batch-Daten bezeichnet. Alternativ oder zusätzlich können die Zustandsvektoren SV von der Maschine M, von einer dazu ähnlichen Maschine und/oder von einer Simulation der Maschine M stammen.

Abhängig von den kontinuierlichen Zustandsvektoren SV werden durch die Maschinensteuerung CTL mittels des zu trainierenden Quantisierungsmoduls QM und des zu trainierenden Steuermoduls CM Steuersignale CS zum Steuern der Maschine M abgeleitet. Durch die abgeleiteten Steuersignale CS wird die Maschine M, eine dazu ähnliche Maschine und/oder eine Simulation der Maschine M gesteuert. Für das vorliegende Ausführungsbeispiel sei angenommen, dass durch die Steuersignale CS die Maschine M gesteuert wird.

Zur Bewertung der vorgenommenen Steuerung wird ein durch die Steuersignale CS induziertes Verhalten der Maschine M erfasst und in Form eines Verhaltenssignals VS kodiert, das von der Maschine M zur Maschinensteuerung CTL übermittelt wird. Alternativ oder zusätzlich kann ein Verhaltenssignal VS auch Teil eines Zustandsvektors SV sein und/oder zumindest teilweise aus diesem abgeleitet werden.

Ein Verhaltenssignal VS kann insbesondere eine Leistung, einen Ertrag, eine Geschwindigkeit, eine Laufzeit, eine Präzision, eine Fehlerrate, ein Fehlerausmaß, einen Ressourcenbedarf, einen Wirkungsgrad, eine Temperatur, einen Druck, einen Schadstoffausstoß, eine Stabilität, einen Verschleiß, eine Lebensdauer und/oder andere Zielparameter der Maschine M spezifizieren. Insbesondere können im Verhaltenssignal VS für eine Performanz der Maschine M relevante Zustandsgrößen der Maschine M kodiert werden. Speziell bei einer Produktionsanlage kann das Verhaltenssignal VS auch eine Produktqualität oder eine andere Produkteigenschaft betreffen. Bei einer Gasturbine kann das Verhaltenssignal VS Veränderungen von Verbrennungswechseldruckamplituden, eine Drehzahl oder eine Temperatur der Gasturbine spezifizieren.

Das Training der Maschinensteuerung CTL umfasst insbesondere ein Training des Quantisierungsmoduls QM. Hierbei werden dem Quantisierungsmodul QM die kontinuierlichen Zustandsvektoren SV als Trainingsdaten zugeführt. Die kontinuierlichen Zustandsvektoren SV werden vom Quantisierungsmodul QM auf einen Satz von diskreten Zustandsvektoren DSV abgebildet, wobei die Abbildung durch eine Vielzahl von Parametern einstellbar ist. Erfindungsgemäß soll die Abbildung, d.h. die Art und Weise der Diskretisierung, so eingestellt werden, dass eine Performanz der Maschine M optimiert wird.

Unter einer Diskretisierung sei dem fachüblichen Sprachgebrauch folgend, insbesondere eine Zerlegung eines Kontinuums oder Quasikontinuums in einzelne diskrete Bereiche oder Abschnitte verstanden. In diesem Sinne kann ein jeweiliger diskreter Zustandsvektor als Repräsentant für einen kontinuierlichen Bereich oder Abschnitt in einem kontinuierlichen oder quasikontinuierlichen Zustandsraum aufgefasst werden.

Unter einem Training sei allgemein eine Optimierung einer Abbildung von Eingabesignalen auf Ausgabesignale verstanden. Diese Abbildung wird nach vorgegebenen, gelernten und/oder zu lernenden Kriterien während einer Trainingsphase optimiert.

Als Kriterien können hierbei z. B. bei Steuermodellen eine Performanz oder ein Erfolg einer Steueraktion, bei Prädiktionsmodellen ein Prädiktionsfehler oder bei Klassifikationsmodellen ein Klassifikationsfehler herangezogen werden. Durch das Training können beispielweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens ist eine Vielzahl von effizienten Optimierungsverfahren verfügbar. Insbesondere können populationsbasierte Optimierungsverfahren, gradientenfreie Optimierungsverfahren, Gradientenabstiegsverfahren, Partikelschwarmoptimierungen und/oder genetische Optimierungsverfahren verwendet werden.

Im vorliegenden Ausführungsbeispiel ist das Quantisierungsmodul QM als künstliches neuronales Netz implementiert, dessen Ausgabeschicht eine vorgegebene Anzahl N diskreter Neuronen umfasst. Die diskreten Neuronen geben nach Aktivierung jeweils ein diskretes Ausgabesignal, beispielsweise entweder 0 oder 1 aus. Die N diskreten Ausgabesignale der diskreten Ausgabeneuronen bilden dann zusammen einen diskreten Zustandsvektor DSV. Offenbar können auf diese Weise 2^{N} unterschiedliche Zustände dargestellt bzw. unterschieden werden. In diesem Sinne bilden die möglichen 2^{N} diskreten Zustandsvektoren den Satz von diskreten Zustandsvektoren, auf den die eingespeisten kontinuierlichen Zustandsvektoren SV abgebildet werden.

Die vom Quantisierungsmodul QM aus den kontinuierlichen Zustandsvektoren SV abgeleiteten diskreten Zustandsvektoren DSV werden in das zu Steuermodul CM eingespeist. Im vorliegenden Ausführungsbeispiel ist das Steuermodul CM ebenfalls zu trainieren und vorzugsweise als künstliches neuronales Netz implementiert. Das Steuermodul CM und/oder sein Training ist dabei spezifisch für diskrete Steuerprobleme bzw. diskrete Markow-Prozesse ausgelegt.

Durch das Steuermodul CM werden aus den diskretisierten Zustandsvektoren DSV Steuersignale CS abgeleitet. Die abgeleiteten Steuersignale CS werden der Maschine M zugeführt, um diese zu steuern. Ein durch diese Steuerung induziertes Verhalten der Maschine M wird in Form des Verhaltenssignals VS kodiert. Letzteres wird zur Maschinensteuerung CTL übermittelt und dort in den Performanzbewerter EV eingespeist.

Der Performanzbewerter EV dient dem Zweck, für eine jeweilige durch ein Steuersignal CS ausgelöste Steueraktion eine Performanz des durch diese Steueraktion induzierten Verhaltens der Maschine M anhand des Verhaltenssignals VS zu ermitteln. Die Performanz kann hierbei wie im Zusammenhang mit Figur 1 erläutert, definiert sein.

Zu diesem Zweck wird das Verhaltenssignal VS durch den Performanzbewerter EV vorzugsweise mittels einer sog. Belohnungsfunktion ausgewertet. Die Belohnungsfunktion ermittelt und quantifiziert hierbei die Performanz eines aktuellen Systemverhaltens als Belohnung. Eine solche Belohnungsfunktion wird häufig auch als Kostenfunktion, Verlustfunktion, Zielfunktion, Reward-Function oder Value-Function bezeichnet.

Alternativ oder zusätzlich kann die Performanz auch aus einem simulierten oder prädizierten Verhalten der Maschine M abgeleitet werden. Darüber hinaus kann ein Verhalten der Maschine M auch aus einer Datenbank eingelesen werden. Beispielsweise mittels einer zustandsspezifischen und steueraktionsspezifischen Datenbankabfrage.

Vorzugsweise wird durch den Performanzbewerter EV eine in die Zukunft diskontierte Performanz ermittelt. Hierbei wird eine gewichtete Summe zukünftiger Performanzwerte mit in Richtung der Zukunft abfallenden Gewichtungsfaktoren gebildet.

Neben dem Verhaltenssignal VS kann der Performanzbewerter EV auch einen Betriebszustand, eine aktuelle Steueraktion und/oder einen oder mehrere Sollwerte für ein Systemverhalten bei der Auswertung berücksichtigen.

Die ermittelte Performanz wird durch den Performanzbewerter EV in Form eines Performanzsignals PS quantifiziert. Mittels des Performanzsignals PS sollen das Quantisierungsmodul QM und das Steuermodul CM darauf trainiert werden, die Performanz der Maschine M zu optimieren. Das Performanzsignal PS wird zu diesem Zweck - wie in Figur 2 durch strichlierte Pfeile angedeutet - einerseits zum Quantisierungsmodul QM und andererseits zum Steuermodul CM zurückgeführt.

Für das jeweilige Training stehen grundsätzlich eine Vielzahl von maschinellen Lernverfahren, insbesondere Verfahren des bestärkenden Lernens und Rückpropagationsverfahren zur Verfügung.

Im vorliegenden Fall wird das Quantisierungsmodul QM vorzugsweise mittels eines gradientenfreien Optimierungsverfahrens, z.B. mittels einer Partikelschwarmoptimierung trainiert. Dabei wird ein Parameterraum des Quantisierungsmoduls QM systematisch abgesucht, um eine performanzoptimierende Parameterkombination zu finden. Im Ergebnis wird eine maschinen- und steuerungsspezifische Diskretisierung gesucht, die sich in Verbindung mit diskreten Steuerstrategien als besonders vorteilhaft erweist. Im Zuge des Trainings werden anhand des rückgeführten Performanzssignals PS Lernparameter des Quantisierungsmoduls QM derart eingestellt, dass im Zusammenwirken mit dem Steuermodul CM die Performanz der Maschine M optimiert wird.

Demgegenüber wird das Steuermodul CM anhand der diskretsierten Zustandsvektoren DSV vorzugsweise mittels eines Verfahrens der dynamischen Programmierung und/oder mittels eines Verfahrens des diskreten bestärkenden Lernens trainiert. Insofern das Steuermodul CM für diskrete Zustandsräume ausgelegt ist, können zum Training des Steuermoduls CM Lernverfahren verwendet werden, die für diskrete Markow-Entscheidungsprobleme mathematisch beweisbar konvergieren und eine optimierte Parameterkombination finden können. Zu diesem Zweck ist eine Vielzahl von effizienten diskreten Optimierungsverfahren verfügbar.

Beim Training des Steuermoduls CM werden dessen Lernparameter anhand des rückgeführten Performanzssignals PS derart eingestellt, dass im Zusammenwirken mit dem Quantisierungsmodul QM die Performanz der Maschine M optimiert wird.

Das Training des Quantisierungsmoduls QM und das Training des Steuermoduls CM können nacheinander, intermittierend oder parallel durchgeführt werden.

Durch das Training des Quantisierungsmoduls QM und des Steuermoduls CM wird die Maschinensteuerung CTL konfiguriert. Die Hintereinanderschaltung des trainierten Quantisierungsmoduls QM und des nachgeschalteten trainierten Steuermoduls CM kann als hybride Policy aufgefasst werden, die aus kontinuierlichen Zustandsvektoren SV performanzoptimierte Steuersignale CS ableitet. Durch den spezifischen Aufbau und das spezifische Training können indessen viele Nachteile von bekannten, für kontinuierliche Zustandsräume ausgelegten Verfahren vermieden werden.

## Patentansprüche

1. Computerimplementiertes Verfahren zum Konfigurieren einer Maschinenteuerung (CTL), wobei
a) eine Vielzahl von Trainingsdatensätzen eingelesen werden, die jeweils einen kontinuierlichen, einen Betriebszustand einer Maschine (M) quantifizierenden Zustandsvektor (SV) umfassen,
b) ein Steuermodul (CM) bereitgestellt wird, das anhand eines Zustandsvektors (SV) ein Steuersignal (CS) zum Steuern der Maschine (M) ausgibt,
c) die kontinuierlichen Zustandsvektoren (SV) in ein lernbasiertes Quantisierungsmodul (QM) eingespeist werden, das die kontinuierlichen Zustandsvektoren (SV) auf einen Satz von diskreten Zustandsvektoren (DSV) abbildet und damit diskretisiert,
d) die diskretisierten Zustandsvektoren (DSV) in das Steuermodul (CM) eingespeist werden, das daraus Steuersignale (CS) ableitet,
e) eine Performanz für ein Steuern der Maschine (M) durch die abgeleiteten Steuersignale (CS) ermittelt wird,
f) das Quantisierungsmodul (QM) darauf trainiert wird, die ermittelte Performanz zu optimieren, und
g) die Maschinensteuerung (CTL) anhand des Steuermoduls (CM) und des diesem vorgeschalteten trainierten Quantisierungsmoduls (QM) zum Steuern der Maschine (M) eingerichtet wird.

2. Verfahren nach Anspruch 1, **dadurch gekennzeichnet,**
**dass** die Maschine (M), eine dazu ähnliche Maschine und/oder eine Simulation der Maschine (M) durch die abgeleiteten Steuersignale (CS) gesteuert und ein resultierendes Verhalten erfasst wird, und
**dass** die Performanz anhand des erfassten Verhaltens ermittelt wird.

3. Verfahren nach einem der vorhergehenden Ansprüche, **dadurch gekennzeichnet, dass**
- ein aus Anwendung eines vom Steuermodul (CM) abgeleiteten Steuersignals (CS) resultierender Folge-Betriebszustand der Maschine (M) durch einen kontinuierlichen Folgezustandsvektor quantifiziert wird,
- der kontinuierliche Folgezustandsvektor durch das Quantisierungsmodul (QM) auf einen diskreten Folgezustandsvektor aus dem Satz der diskreten Zustandsvektoren (DSV) abgebildet wird,
- das Steuermodul (CM) aus dem diskreten Folgezustandsvektor ein Folgesteuersignal ableitet, und
- bei der Ermittlung der Performanz ein Steuern der Maschine (M) durch das abgeleitete Folgesteuersignal berücksichtigt wird.

4. Verfahren nach einem der vorhergehenden Ansprüche, **dadurch gekennzeichnet,**
**dass** das Steuermodul (CM) lernbasiert ist und anhand der diskretisierten Zustandsvektoren (DSV) darauf trainiert wird, die ermittelte Performanz zu optimieren.

5. Verfahren nach Anspruch 4, **dadurch gekennzeichnet, dass** das Steuermodul (CM) mittels eines Verfahrens der dynamischen Programmierung und/oder mittels eines Verfahrens des bestärkenden Lernens trainiert wird.

6. Verfahren nach einem der vorhergehenden Ansprüche, **dadurch gekennzeichnet, dass**
das Quantisierungsmodul (QM) ein neuronales Netz umfasst, und dass die diskretisierten Zustandsvektoren (DSV) durch diskrete Ausgabesignale einer vorgegebenen Anzahl von Neuronen einer Ausgabeschicht des neuronalen Netzes dargestellt werden.

7. Verfahren nach einem der vorhergehenden Ansprüche, **dadurch gekennzeichnet,**
**dass** der Satz der diskreten Zustandsvektoren (DSV), eine Anzahl der diskreten Zustandsvektoren (DSV) und/oder ein Mindestabstand der diskreten Zustandsvektoren (DSV) vorgegeben sind.

8. Verfahren nach einem der vorhergehenden Ansprüche, **dadurch gekennzeichnet, dass**
zum Training des Quantisierungsmoduls (QM) ein populationsbasiertes Optimierungsverfahren, ein gradientenfreies Optimierungsverfahren, eine Partikelschwarmoptimierung und/oder ein genetisches Optimierungsverfahren verwendet wird.

9. Verfahren nach einem der vorhergehenden Ansprüche, **dadurch gekennzeichnet,**
**dass** das Quantisierungsmodul (QM) und/oder das Steuermodul (CM) ein künstliches neuronales Netz, ein rekurrentes neuronales Netz, ein faltendes neuronales Netz, ein mehrlagiges Perzeptron, ein bayessches neuronales Netz, einen Autoencoder, einen variationalen Autoencoder, einen Gauß-Prozess, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfassen.

10. Verfahren nach einem der vorhergehenden Ansprüche, **dadurch gekennzeichnet, dass**
die Maschine (M) ein Roboter, ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Verbrennungskraftmaschine, eine Kühlanlage oder eine Heizungsanlage ist.

11. Maschinensteuerung (CTL), eingerichtet zum Ausführen aller Verfahrensschritte eines Verfahrens nach einem der vorhergehenden Ansprüche.

12. Computerprogrammprodukt eingerichtet zum Ausführen aller Verfahrensschritte eines Verfahrens nach einem der Ansprüche 1 bis 10.

13. Computerlesbares Speichermedium mit einem Computerprogrammprodukt nach Anspruch 12.
